Europäisches Patentamt

European Patent Office

Office européen des brevets

(11) Veröffentlichungsnummer: **0 287 022 B1**

## (12) EUROPÄISCHE PATENTSCHRIFT

(45) Veröffentlichungstag der Patentschrift: **24.06.92**

(21) Anmeldenummer: **88105772.3**

(22) Anmeldetag: **12.04.88**

(51) Int. Cl.⁵: **F16B 13/06**

(54) **Dübel, insbesondere Heizkörperdübel.**

(30) Priorität: **16.04.87 DE 3713018**

(43) Veröffentlichungstag der Anmeldung:
**19.10.88 Patentblatt 88/42**

(45) Bekanntmachung des Hinweises auf die
Patenterteilung:
**24.06.92 Patentblatt 92/26**

(84) Benannte Vertragsstaaten:
**AT BE CH DE FR GB IT LI NL SE**

(56) Entgegenhaltungen:
**EP-A- 0 143 922**
**DE-A- 2 739 634**
**DE-C- 263 925**
**GB-A- 2 160 610**

(73) Patentinhaber: **"TOGE-DÜBEL" A. Gerhard
GmbH
Illesheimer Strasse 10
W-8500 Nürnberg 80(DE)**

(72) Erfinder: **Gerhard, Anton
Illesheimer Strasse 10
W-8500 Nürnberg 80(DE)**

(74) Vertreter: **Rau, Manfred, Dr. Dipl.-Ing. et al
Rau & Schneck, Patentanwälte Königstrasse
2
W-8500 Nürnberg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Dübel nach dem Oberbegriff des Anspruches 1.

Ein derartiger aus der DE-C-263 925 bekannter Dübel weist ein Doppel-Spreizteil mit zwei über einen Rohrabschnitt miteinander verbundenen Konus-Teilen auf, die gegen entsprechende Schrägflächen der Hülse anliegen. Die Anlageflächen für die Konus-Teile sind durch entsprechendes Herausarbeiten von Schrägflächen an der Innenwand der aus Blech hergestellten Dübelhülse geschaffen. Ein solcher Dübel läßt sich nur um weniger als die doppelte Dicke des die Hülse bildenden Bleches spreizen. Außerdem sind große Spreizkräfte erforderlich.

Aus der EP-A-0 143 922 ist ein Dübel der allgemeinen Gattung bekannt, dessen Hülse aus zwei Halbschalen besteht, die mittels mindestens einer diese beiden Halbschalen umgreifenden Klammer zusammengehalten werden. In diesen Halbschalen sind in den Innenraum der Hülse ragende Erhebungen ausgeformt, die mit entsprechenden Konusflächen des Doppel-Spreizteils zusammenwirken. Bei dieser Ausgestaltung ist zwar auch ein Spreizen um mehr als die doppelte Dicke des die Halbschalen bildenden Bleches möglich; der Fertigungsaufwand für einen solchen Dübel ist aber verhältnismäßig groß. Außerdem sind die Spreizkräfte erheblich. Der Spreizteil weist einen endseitigen konusförmigen Spreizkopf auf, der mit einem Vorsprung versehen ist, der in einen der beiden durch die Halbschalen begrenzten Schlitze eingreift, um ein Verdrehen des Spreizteils gegenüber der Hülse zu verhindern. Obwohl dieser eine Vorsprung sich verjüngt, hat er keine Funktion als Spreizkeil.

Der Erfindung liegt die Aufgabe zugrunde, einen Dübel der gattungsgemäßen Art so auszugestalten, daß er einerseits einen großen Spreizbereich aufweisen kann und daß er andererseits bei einfachem und insbesondere fertigungstechnisch einfachem Aufbau mit geringen von außen aufzubringenden Spreizkräften im Mauerwerk verankerbar ist.

Diese Aufgabe wird erfindungsgemäß durch die Merkmale im Kennzeichnungsteil des Anspruches 1 gelöst. Durch die Ausgestaltung des End-Spreizkopfes wird erreicht, daß die Hülse - obwohl sie einstückig ausgebildet ist - mit hohen Spreizkräften senkrecht zu der durch die diametral einander gegenüberliegenden Schlitze gebildeten Ebene auseinandergedrückt und im Mauerwerk verankert wird. Gleichzeitig erfolgt das Spreizen im Bereich des Innen-Konus. Diese Ausgestaltung ermöglicht es, den Dübel um ein Mehrfaches, insbesondere ein Vierfaches der Dicke des die Hülse bildenden Bleches zu spreizen. Ein weiterer großer Vorteil der erfindungsgemäßen Ausgestaltung liegt darin, daß das Doppel-Spreizteil vom freien Ende der Hülse her, also von deren Spreizende her, durch einfaches Einschieben in die Hülse montiert werden kann, da im Bereich des freien Endes keine wesentlichen, ein Durchschieben des Innen-Konus behindernden Flächen ausgebildet sind. Durch die Maßnahmen nach Anspruch 2 wird sichergestellt, daß trotz der Spreizung der Hülse mit dem Spreizkopf im Bereich der Schlitze die die Schlitze begrenzenden Randbereiche nicht unkontrolliert von den Spreizkeilen abrutschen. Um andererseits sicherzustellen, daß der Dübel in einfacher Weise in ein Bohrloch eingeführt werden kann, sind die Maßnahmen nach Anspruch 3 und 4 vorgesehen.

Durch die Weiterbildung nach Anspruch 5 ist sichergestellt, daß auch im Bereich des Innen-Konus ein sehr großer Spreizbereich der Hülse erreicht wird. Insbesondere durch die Weiterbildung nach Anspruch 6 wird hierbei sichergestellt, daß die Hülse über ihren ganzen Umfang gespreizt wird. Im Zusammenwirken mit der Ausgestaltung des Spreizkopfes wird hierdurch eine sehr gleichmäßige Spreizung erreicht. Des weiteren wird auch hier im Bereich des Innen-Konus eine Spreizung mit einem geringen Kraftaufwand ermöglicht. Die Weiterbildungen nach den Ansprüchen 7 und 8 ermöglichen einen einfachen, besonders leichten Aufbau des Doppel-Spreizteils, dessen sichere Führung in der Hülse und eine besonders kurze Ausbildung der Schraube, da die Gewindebohrung nur im Innen-Konus ausgebildet ist. Der erfindungsgemäß ausgestaltete Dübel läßt sich in festem Mauerwerk wie in Gitter-Ziegel-Mauerwerk einsetzen.

Ein Ausführungsbeispiel der Erfindung wird nachfolgend anhand der Zeichnung näher erläutert. Es zeigt

Fig. 1      eine Seiten-Längsansicht eines Dübels mit teilweise aufgebrochen dargestellter Hülse,

Fig. 2      eine Draufsicht auf den Dübel nach Fig. 1 ebenfalls in teilweise aufgebrochener Darstellung,

Fig. 3      eine Stirnansicht des Dübels gemäß dem Sichtpfeil III in Fig. 1,

Fig. 4      eine weitere Stirnansicht des Dübels gemäß dem Sichtpfeil IV in Fig. 1,

Fig. 5      eine Seiten-Längsansicht der Hülse des Dübels mit einer im Schnitt dargestellten, als Kopfteil dienenden Befestigungseinrichtung,

Fig. 6      eine Stirnansicht der Hülse gemäß dem Sichtpfeil VI in Fig. 5,

Fig. 7      einen Schnitt durch die Hülse gemäß der Schnittlinie VII-VII in Fig. 5,

Fig. 8      eine Seiten-Längsansicht eines Doppel-Spreizteils des Dübels und

Fig. 9     einen Schnitt durch das Doppel-Spreizteil gemäß der Schnittlinie IX-IX in Fig. 8.

Der in der Zeichnung dargestellte Heizkörper-Dübel weist eine im wesentlichen zylindrische Hülse 1, ein Doppel-Spreizteil 2, eine Schraube 3 und ein Kopfteil 4 auf. Die Hülse 1 ist in üblicher Weise aus Metallblech durch entsprechendes Rollen hergestellt, so daß sie einen sich über ihre volle Länge und parallel zu ihrer Mittel-Längs-Achse 5 erstreckenden Längsschlitz 6 aufweist. Diametral dem Längsschlitz 6 gegenüberliegend ist ein Spreizschlitz 7 in der Hülse 1 ausgebildet, der ebenfalls parallel zur Achse 5 verläuft und sich von einem Ende der Hülse 1, nämlich dem im Mauerwerk anzuordnenden Spreizende 8, über ein Drittel bis eine Hälfte der Länge der Hülse, im wesentlichen also über deren Spreizbereich 9, erstreckt. Der Spreizbereich 9 erstreckt sich vom Spreizende 8 der Hülse 1 etwa über deren halbe Länge.

Das Kopfteil 4 weist einen zylindrischen, die Hülse 1 an ihrem dem Spreizende 8 entgegengesetzten Ende umfassenden im wesentlichen topfförmigen Zentrier-und Halteabschnitt 10 auf, der in seinem stirnseitigen Abschluß 11 eine koaxial zur Achse 5 angeordnete Bohrung 12 aufweist, die von der Schraube 3 durchsetzt wird und deren Kopf 13 sich gegen den Abschluß 11 abstützt.

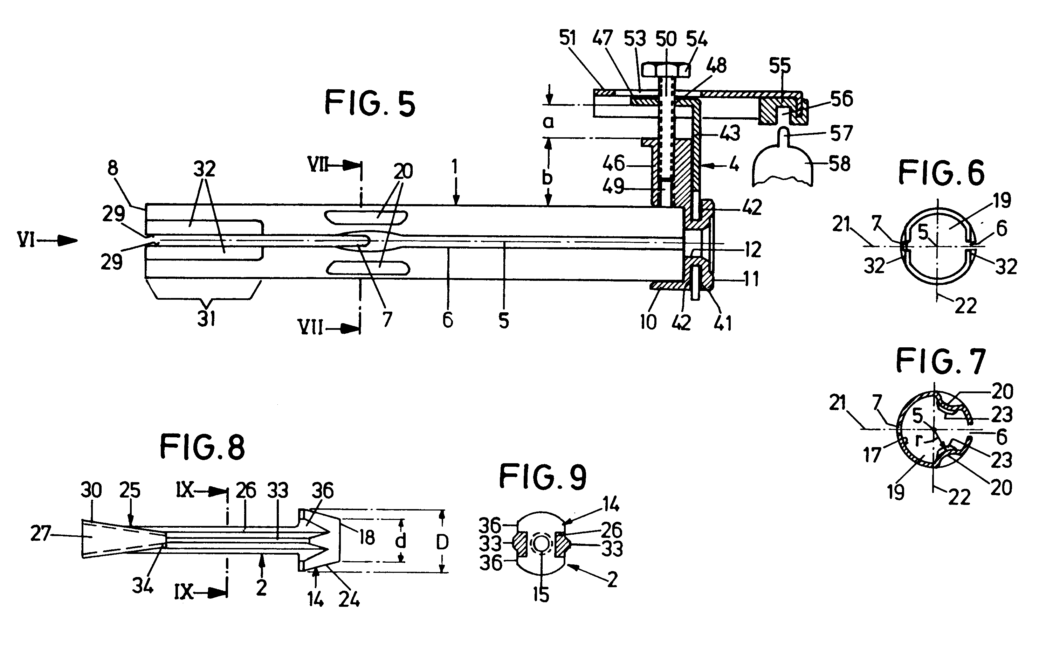

Das Doppel-Spreizteil 2 weist einen Innen-Konus 14 auf, der mit einer Gewindebohrung 15 versehen ist, in die das Gewinde 16 der Schraube 3 eingreift. Der Außendurchmesser D des Innen-Konus 14 entspricht annähernd dem Innendurchmesser d' der Hülse 1, so daß der Innen-Konus 14 leicht verschiebbar, aber weitgehend spielfrei gegenüber der Innenwand 17 der Hülse liegt. Das dem Kopfteil 4 zugewandte verjüngte Ende 18 des Innen-Konus 14 weist einen Durchmesser d auf. Im etwa in der Mitte der Hülse 1 liegenden Bereich, also im Bereich des dem Spreizende 8 abgewandten Endes des Spreizbereiches 9 der Hülse 1, sind zwei durch Sicken gebildete in den Innenraum 19 der Hülse 1 hineinragende Erhebungen 20 ausgebildet. Zur Erläuterung sind in Fig. 7 zwei senkrecht zueinander stehende Ebenenen 21, 22 eingetragen, die sich längs der Achse 5 schneiden. Die eine Ebene 21 geht mittig durch die beiden Schlitze 6, 7, die andere Ebene 22 liegt senkrecht hierzu. Die beiden Erhebungen 20 werden - wie aus Fig. 7 hervorgeht - jeweils einseitig von der Ebene 22 begrenzt und erstrecken sind - im Querschnitt - von dort über etwa 30 bis 45° in Richtung auf den Längsschlitz 6 hin. Fig. 5 zeigt, daß der Spreizschlitz 7 etwa in der Längsmitte der Erhebungen 20 endet.

Die Erhebungen weisen - bezogen auf den Innenraum 19 bzw. relativ zur Achse 5 eine in Richtung auf das Kopfteil 4 hin zunehmende Steigung auf, d.h. ihre Anlagefläche 23 für die als Spreizfläche 24 dienende Außenfläche des Innen-Konus 14 nähert sich - in Richtung auf das Kopfteil 4 hin - der Achse 5. Der Durchmesser d des verjüngten Endes 18 des Innen-Konus 14 ist etwas kleiner als der doppelte Radius r der Hülse 1 am Beginn der Erhebungen 20, gemessen zwischen der Achse 5 und der entsprechenden Anlagefläche 23 der Erhebung 20 auf der dem Spreizende 8 der Hülse 1 benachbarten Ende der jeweiligen Erhebung 20.

Das Doppel-Spreizteil 2 weist außer dem Innen-Konus 14 einen dem Spreizende 8 der Hülse 1 zuzuordnenden End-Spreizkopf 25 auf. Der End-Spreizkopf 25 und der Innen-Konus 14 sind durch zwei zueinander und zur Achse 5 parallele, in der Ebene 21 anzuordnende Verbindungsstege 26 miteinander verbunden. Der Spreizkopf 25 weist zwei jeweils auf der Außenseite eines Verbindungssteges 26 angeordnete Spreizkeile 27 auf, von denen einer in den Längsschlitz 6 und der andere in den Spreizschlitz 7 eingreift, d.h. ihre Keilflächen 28 liegen gegen die die Schlitze 6 bzw. 7 begrenzenden Ränder 29 der Hülse 1. Radial außerhalb der Hülse 1 sind an den Spreizkeilen 27 über deren Keilflächen 28 hochstehende Sicherungsstege 30 ausgebildet, die verhindern, das die entsprechenden Ränder 29 der Hülse 1 bei deren Spreizen radial nach außen von den Keilflächen 28 der Spreizkeile 27 abrutschen. Auf der radialen Innenseite werden die Keilflächen 28 durch die über sie hochstehenden Verbindungsstege 26 gesichert. Die Ränder 29 der Schlitze 6, 7 der Hülse 1 sind also zwischen den Sicherungsstegen 30 und den Verbindungsstegen 26 auf den Keilflächen 28 zwangsgeführt.

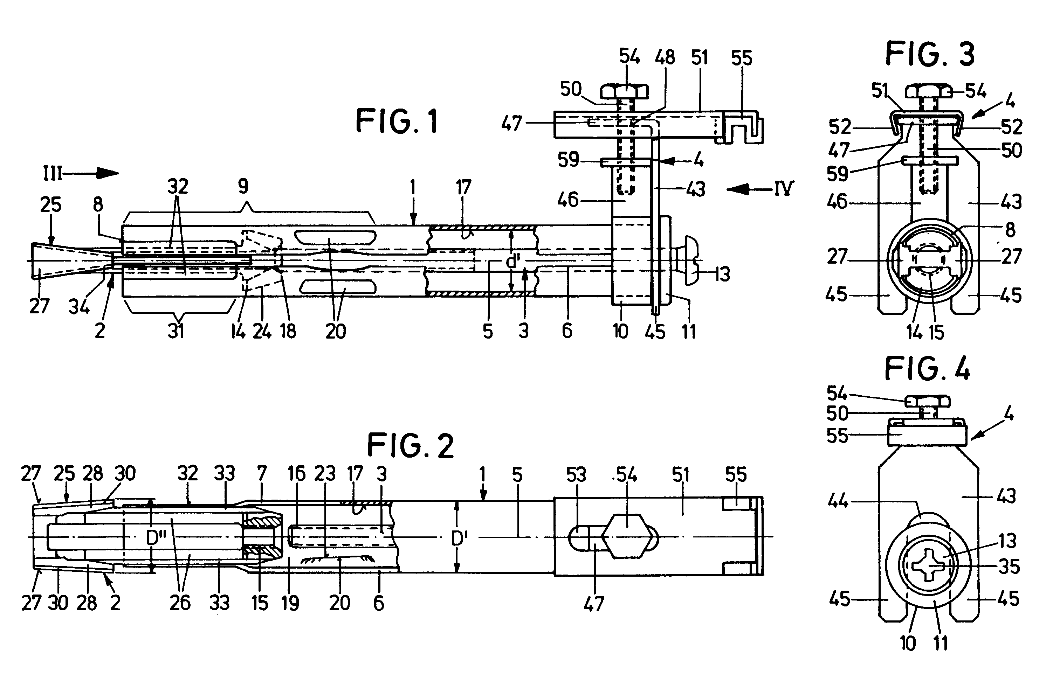

Wie insbesondere aus den Fig. 2 und 6 hervorgeht, weist die Hülse 1 etwa in der vorderen Hälfte des Spreizbereiches 9, d.h. im Einzugsbereich 31 des Spreizkopfes 25, beiderseits der Schlitze 6, 7 jeweils eine Abflachung 32 auf, so daß der maximale Durchmesser D" keinesfalls größer, in der Regel aber geringfügig kleiner ist als der Außendurchmesser D' der Hülse 1. Die Durchmesserverringerung im Bereich der Abflachungen 32 nimmt also in jedem Fall mindestens die radiale Erstreckung der Sicherungsstege 30 auf. Um das Einführen des Dübels in ungespreiztem Zustand in eine Mauerwerks-Bohrloch zu erleichtern, wobei der Spreizkopf 25 über die Hülse 1 vorsteht, verjüngt sich der Spreizkopf 25 - wie aus Fig. 2 hervorgeht - zu seinem der Hülse 1 abgewandten freien Ende hin.

An den Verbindungsstegen 26 sind parallel zur Achse 5 in der Ebene 21 angeordnete Führungsstege 33 angebracht, die zumindest in den mit den Abflachungen 32 versehenen Einzugsbereich 31 in die Schlitze 6 und 7 eingreifen, wodurch eine gute Führung des Doppel-Spreizteils 2 relativ zur Hülse 1 erreicht wird.

Das Doppel-Spreizteil 2 ist so ausgebildet, daß in ungespreiztem Zustand der Hülse 1 einerseits der Innen-Konus 14 im Bereich seines verjüngten Endes 18 mit seiner Spreizfläche 24 am zugeordneten Beginn der Anlageflächen 23 der Erhebungen 20 und andererseits der Spreizkopf 25 mit seinen Keilflächen 28 in deren verjüngtem Bereich 34 gegen die dem Spreizende 8 der Hülse 1 zugeordneten Bereiche der Ränder 29 anliegt. Wenn mit einem geeigneten, in den Kreuz-Schlitz 35 im Kopf 13 der Schraube 3 eingreifenden Schraubendreher die Schraube 3 unter Abstützung ihres Kopfes 13 gegen den Abschluß 11 des Zentrier- und Halteabschnitts 10 so verdreht wird, daß das Doppel-Spreizteil 2 in die Hülse 1 hineingezogen wird, dann erfolgt eine doppelte Spreizung. Zum einen drücken die Keilflächen 28 die Hülse 1 in deren dem Spreizende 8 benachbarten Einzugsbereich 31 etwa senkrecht zu der die beiden Schlitze 6, 7 aufnehmenden Ebene 21, also etwa in Richtung der Ebene 22 auf. Da die Ränder 29 zwischen den Sicherungsstegen 30 einerseits und den Verbindungsstegen 26 andererseits geführt sind, wird die Hülse 1 in diesem Bereich in Richtung der Ebene 21 nicht aufgeweitet. Der Innen-Konus 14 spreizt mit seiner gegen die Anlageflächen 23 der Erhebungen 20 anliegenden Spreizfläche 24 bei seiner Bewegung in Richtung auf das Kopfteil 4 die Hülse 1 primär im Bereich das Längsschlitzes 6. Diese Spreizung pflanzt sich weitgehend über den gesamten Umfang der Hülse 1 fort, d.h. die Hülse 1 wird hier radial über ihren gesamten Umfang gespreizt.

Die Spreizung der Hülse 1 mittels der Keilflächen 28 senkrecht zu ihrer die Schlitze 6, 7 schneidenden Ebene 21 erfordert wenig Kraft zur Verformung der Hülse selber, d.h. die zum Spreizen aufzuwendende Kraft hängt im wesentlichen von der Festigkeit des Mauerwerks ab. Auch das Spreizen der Hülse mittels des Innen-Konus 14 in der Nähe des Längsschlitzes 6 erfordert wenig Kraft zum Spreizen der Hülse selber. Insgesamt ist das Spreizen im Mauerwerk also wenig kraftaufwendig.

Da insgesamt vier Keilflächen 28 des End-Spreizkopfes vorgesehen sind und da einerseits der Innen-Konus eine Spreizfläche 24 aufweist und andererseits die Anlageflächen 23 der Erhebungen 20 auch eine Steigung aufweisen, ist eine große Spreizung der Hülse möglich.

Der Dübel ist in einem Mauerwerks-Bohrloch gleichermaßen auf Zug wie auch auf Druck hoch belastbar, da bei einer Bewegung der gespreizten Hülse 1 in ein Bohrloch das Doppel-Spreizteil 2 tiefer in die Hülse 1 geschoben würde und diese daher stärker spreizen würde. Bei einem Zug auf die Hülse 1 würde andererseits das Doppel-Spreizteil 2 nicht gelockert. Die Spreizung der Hülse 1 würde also nicht reduziert.

Wie aus den Fig. 8 und 9 ersichtlich ist, sind am Innen-Konus 14 beiderseits des jeweiligen Führungsstegs 33 abgeflachte Flächen 36 ausgebildet, die den Abflachungen 32 im Einzugsbereich 31 der Hülse 1 entsprechen, so daß eine einfache Montage des Doppel-Spreizteils 2 in der Hülse 1 durch Einschieben von Spreizende 8 her möglich ist.

Der Zentrier- und Halteabschnitt des Kopfteils 4 weist eine Ringnut 41 auf, die zueinander parallele Führungsflächen 42 aufweist. In dieser Ringnut 41 ist ein Radial-Halteteil 43 senkrecht zur Achse 5 verschiebbar und um diese frei drehbar angeordnet. Hierzu ist dieses Halteteil 43 mit einer Längsausnehmung 44 versehen, die zwei zueinander parallele Schenkel 45 begrenzt, die in die Ringnut 41 eingreifen, so daß das Halteteil insgesamt zwischen den Führungsflächen 42 geführt ist.

Am Zentrier- und Halteabschnitt 10 ist eine ebenfalls radial abstehende, d.h. senkrecht zur Achse 5 verlaufende Gewindehülse 46 fest angebracht, die gleichzeitig einseitig als Anlage für das Radial-Halteteil 43 dient, wie insbesondere aus den Fig. 1 und 5 hervorgeht. Das Halteteil 43 weist einen senkrecht abgebogenen parallel zur Mittel-Längs-Achse 5 der Hülse 1 verlaufenden Führungssteg 47 auf, in dem sich eine Gewindebohrung 48 befindet, die mit der Gewindebohrung 49 der Gewindehülse 46 fluchtet. Wenn ein Gewindebolzen 50 zuerst durch die Gewindebohrung 48 im Führungssteg 47 und dann nach einer gewissen Strecke in die Gewindebohrung 49 der Gewindehülse 46 eingeschraubt wird, dann bleibt beim weiteren Einschrauben des Gewindebolzens der Abstand a zwischen dem Führungssteg 47 und der Gewindehülse 46 unverändert, d.h. die radiale Lage des Radial-Halteteils 43 ändert sich relativ zum Zentrier- und Halteabschnitt 10 und damit zur Hülse 1 nicht mehr. Der Abstand b des radial außenliegenden Randes der Gewindehülse 46 von der Hülse 1 ist auf jeden Fall größer als der maximale radiale Verstellweg a des Radial-Halteteils 43, da auch bei maximalem Abstand a der Gewindebolzen 50 noch in die Gewindebohrung 49 eingreifen muß. Andererseits muß aber auch bei minimal möglichem Abstand des Führungssteges 47 von der Gewindehülse 46 der Gewindebolzen 50 noch in die Gewindebohrung 49 passen, also noch nicht die Hülse 1 erreichen.

Auf dem parallel zur Mittel-Längs-Achse 5 der Hülse 1 verlaufenden Führungssteg 47 ist eine Halte-Schieber 51 radial und tangential zur Achse 5 unbeweglich und parallel zu dieser verschiebbar angebracht. Hierzu sind die Ränder dieses Schiebers 51 zu Führungswangen 52 umgebogen, die den Führungssteg 47 auf der der Hülse 1 zugewandten Seite teilweise untergreifen. In dem Halte-Schieber 51 ist ein parallel zur Achse 5 verlaufendes Langloch 53 ausgebildet, das von dem Gewindebolzen 50 durchsetzt wird, dessen Kopf 54 von außen auf dem Halte-Schieber 51 aufliegen kann. Wenn der Gewindebolzen 50 leicht gelöst ist, wenn also sein Kopf 54 einen geringen Abstand von dem Halte-Schieber 51 hat, dann kann dieser parallel zur Achse 5 der Hülse 1 verschoben werden.

An dem der Hülse 1 abgewandten Ende des Halteschiebers 51 ist ein Heizkörper-Halter 55 ausgebildet, der eine Ausnehmung 56 aufweist, die einem entsprechenden Rand 57 eines lediglich angedeuteten Heizkörpers 58 angepaßt ist, so daß sie diesen möglichst spielfrei aufnehmen kann. Entsprechende Heizkörper-Halter 55 gibt es üblicherweise also in mehreren Ausführungen, die den entsprechenden Randprofilen von Heizkörpern angepaßt sind.

Wie sich insbesondere aus den Fig. 1 und 5 ergibt, kann der in der Zeichnung dargestellte Heizkörper-Dübel jeweils von Rand 57 eines Heizkörpers 58 weggerückt hinter dem Heizkörper 58 angeordnet werden. Er kann also aufgrund der Ausbildung des Kopfteils 4 optisch verdeckt hinter einem Heizkörper 58 angebracht werden, wobei er fest in einem Mauerwerks-Bohrloch durch das geschilderte Spreizen verankert werden kann. Zur Befestigung wird dann das Radial-Halteteil 53 mit dem auf dieses aufgesetzten Halte-Schieber 51 in die Ringnut 41 des Zentrier- und Halteabschnitts 50 eingeschoben und radial so in Richtung zur Achse 5 hin verschoben, bis die zur Achse 5 hin offene Ausnehmung 56 den entsprechenden Rand 57 des Heizkörpers 58 aufgenommen hat. Dann wird bei entsprechend manuell fixierter Lage des Radial-Halteteils 43 relativ zur Hülse 1 der Gewindebolzen 50 durch die Gewindebohrung 48 des Führungssteges 47 und dann in die Gewindebohrung 49 der Gewindehülse 46 geschraubt, wodurch die radiale Lage des Halte-Schiebers 51 mit dem Heizkörper-Halter 55 bereits relativ der Hülse 1 fixiert ist. Unmittelbar vor dem Festklemmen des Halte-Schiebers 51 mittels des Kopfes 54 des Gewindebolzens 50 auf dem Führungssteg 47 wird der Schieber 51 mit dem Halter 55 noch in Längsrichtung der Hülse 1 ausgerichtet und dann ebenfalls festgelegt.

Die vorstehend geschilderte Art zur Befestigung von Heizkörpern wird zum Halten des Heizkörpers an der Seite und von oben angewendet. Zur einfachen Abstützung von Heizkörpern an ihrer Unterseite werden bekannte Kopfteile mit einer exzentrischen Nut eingesetzt, wie sie allgemein bekannt sind.

Wie sich aus den vorstehenden Erläuterungen ergibt, bildet das Kopfteil 4 eine radial und achsparallel zur Mittel-Längs-Achse 5 der Hülse 1 einstellbare und fixierbare Befestigungseinrichtung.

Ergänzend sei noch hinzugefügt, daß am radial äußeren Ende der Gewindehülse 46 eine in ihrer Erstreckung in einer Querschnittsebene zur Achse 5 dem Führungssteg 47 entsprechende Abschlußplatte 59 angebracht ist, auf der also - bei einer vereinfachten Ausführungsform - der Halte-Schieber 51 direkt angeordnet werden kann. In diesem Fall ist also bei Fortfall des Radial-Halters 43 eine radiale Einstellung nicht möglich.

## Patentansprüche

1. Dübel, insbesondere Heizkörper-Dübel, bestehend aus einer mindestens in einem Spreizbereich (9) mit mindestens zwei sich parallel zur Mittel-Längs-Achse (5) erstreckenden, einander diametral gegenüberliegenden Schlitzen (6,7) versehenen im wesentlichen zylindrischen Hülse (1), einem im Spreizbereich (9) in der Hülse (1) angeordneten Doppel-Spreizteil (2), einer in eine Gewindebohrung (15) des Spreizteils (2) eingreifenden koaxialen Schraube (3) und einem sich an dem dem Spreizbereich (9) abgewendeten Ende der Hülse (1) gegen diese abstützenden als Widerlager für die Schraube (3) dienenden Kopfteil (4), wobei das Doppel-Spreizteil (2) einen mit einer Spreizfläche (24) gegen Anlageflächen (23) von in den Innenraum (19) der Hülse (1) vorstehenden Erhebungen (20) anliegenden Innen-Konus (14) und einen im Bereich des freien Endes der Hülse (1) in diese eingreifenden End-Spreizkopf (25) aufweist, dadurch gekennzeichnet, daß der Spreizkopf (25) in die einander diametral gegenüberliegenden Schlitze (6,7) eingreifende Spreizkeile (27) aufweist, deren Keilflächen (28) gegen die die Schlitze (6,7) begrenzenden Ränder (29) der Hülse (1) anliegen.

2. Dübel nach Anspruch 1, dadurch gekennzeichnet, daß die Spreizkeile (27) außerhalb der Hülse (1) über die Keilflächen (28) hochstehende Sicherungsstege (30) aufweisen.

3. Dübel nach Anspruch 1 oder 2, dadurch gekennzeichnet, daß die Hülse (1) über einen Einzugsbereich (31) des Spreizkopfes (25) beiderseits der Schlitze (6,7) Abflachungen (32) aufweist.

4. Dübel nach Anspruch 3, dadurch gekennzeichnet, daß der größte Durchmesser (D″) des Spreizkopfes (25) höchstens gleich dem Außendurchmesser (D′) der Hülse (1) ist.

5. Dübel nach einem der Ansprüche 1 bis 4, dadurch gekennzeichnet, daß die Anlageflächen (23) der Erhebungen (20) zum Kopfteil (4) hin ansteigen.

6. Dübel nach einem der Ansprüche 1 bis 5, wobei der eine Schlitz ein durchgehender Längsschlitz (6) ist und der andere Schlitz (Spreizschlitz 7) sich bis in den Bereich der Erhebungen (20) erstreckt, dadurch gekennzeichnet, daß die Erhebungen (20) benachbart zum Längsschlitz (6) angeordnet sind.

7. Dübel nach einem der Ansprüche 1 bis 6, dadurch gekennzeichnet, daß der Innen-Konus (14) und der Spreizkopf (25) über zwei parallel zur Mittel-Längs-Achse (5) verlaufende Verbindungsstege (26) miteinander verbunden sind.

8. Dübel nach Anspruch 7, dadurch gekennzeichnet, daß an den Verbindungsstegen (26) zumindest teilweise in die Schlitze (6,7) eingreifende Führungsstege (33) ausgebildet sind.

9. Dübel nach einem der Ansprüche 1 bis 8, dadurch gekennzeichnet, daß der Spreizkopf (25) sich zu seinem freien Ende hin leicht verjüngt.

10. Dübel nach Anspruch 3, dadurch gekennzeichnet, daß der Innen-Konus (14) den Abflachungen (32) der Hülse (1) angepaßte Flächen (36) aufweist.

## Claims

1. Dowel, in particular radiator dowel, consisting of a substantially cylindrical sleeve (1), which is provided at least in an expanding zone (9) with at least two slots (6, 7) extending parallel to the central longitudinal axis (5) and being located diametrically opposite to each other, of a double expanding member (2) disposed in the expanding zone (9) of the sleeve (1), of a coaxial screw (3) engaging with a threaded bore (15) of the expanding member (2), and of a head member (4) supporting on the sleeve (1) at the end of the sleeve (1), which end faces away from the expanding zone (9), which head member (4) serves as an abutment for the screw (3), whereby the double expanding member (2) is provided with an inner cone (14) which abuts with an expanding surface (24) on contact surfaces (23) of projections (20) protruding into the inner space (19) of the sleeve (1) and with an end expanding head (25) engaging with the sleeve (1) in the region of the free end of the sleeve (1), characterized in that the expanding head (25) is provided with expanding wedges (27) which engage with the slots (6, 7) being located diametrically opposite each other, the wedge surfaces (28) of the expanding wedges (27) abutting on the edges (29) of the sleeve (1) which delimit the slots (6, 7).

2. Dowel according to claim 1, characterized in that the expanding wedges (27) comprise securing webs (30) which are outside of the sleeve (1) and which extend over the wedge surfaces (28).

3. Dowel according to claim 1 or 2, characterized in that the sleeve (1) comprises flattenings (32) on both sides of the slots (6, 7) along a drawing-in area (31) of the expanding head (25).

4. Dowel according to claim 3, characterized in that the largest diameter (D") of the expanding head (25) is at maximum equal to the outer diameter (D') of the sleeve (1).

5. Dowel according to one of claims 1 to 4, characterized in that the contact surfaces (23) of the projections (20) ascend towards the head member (4).

6. Dowel according to one of claims 1 to 5, one of the slots being a continuous longitudinal slot (6) and the other slot (expanding slot 7) extending up to the region of the projections (20), characterized in that the projections (20) are disposed adjacent to the longitudinal slot (6).

7. Dowel according to one of claims 1 to 6, characterized in that the inner cone (14) and the expanding head (25) are interconnected via two connection webs (26) running parallel to the central longitudinal axis (5).

8. Dowel according to claim 7, characterized in that guide webs (33) are formed at the connection webs (26), which guide webs (33) engage at least partially with the slots (6, 7).

9. Dowel according to one of claims 1 to 8, characterized in that the expanding head (25) slightly tapers towards its free end.

10. Dowel according to claim 3, characterized in that the inner cone (14) is provided with surfaces (36) which are adapted to the flattenings (32) of the sleeve (1).

## Revendications

1. Cheville, en particulier cheville pour radiateurs comprenant une douille (1) globalement cylindrique comportant au moins dans une zone d'écartement (9) deux fentes (6, 7) diamétralement opposées l'une à l'autre et s'étendant en parallèle à l'axe central longitudinal (5), une pièce d'écartement double (2) disposée dans la zone d'écartement (9) de la douille (1), une vis coaxiale (3) venant en prise avec un trou taraudé (15) de la pièce d'écartement (2) ainsi qu'avec une pièce de tête (4) à l'extrémité de la douille (1) opposée à la zone d'écartement (9) qui s'appuie sur la douille et sert de butée à la vis (3), la pièce d'écartement double (2) présentant un cône intérieur (14) dont une surface d'écartement (24) vient en contact avec des surfaces de contact (23) de saillies (20) dépassant vers l'intérieur (19) de la douille (1) et une tête d'écartement d'extrémité (25) venant en contact avec la douille (1) dans la région de l'extrémité libre de celle-ci, caractérisée en ce que

   la tête d'écartement (25) présente des coins d'écartement (27) s'introduisant dans les fentes (6, 7) diamétralement opposées l'une à l'autre et dont les surfaces obliques (28) viennent en contact avec les bords (29) de la douille (1) définissant les fentes (6, 7).

2. Cheville selon la revendication 1, caractérisée en ce que les coins d'écartement (27) présentent des barrettes d'ancrage (30) faisant saillie à l'extérieur de la douille (1) sur les surfaces obliques (28).

3. Cheville selon la revendication 1 ou la revendication 2, caractérisée en ce que la douille (1) présente des méplats (32) sur une région de pénétration (31) de la tête d'écartement (25) et des deux côtés des fentes (6, 7).

4. Cheville selon la revendication 3 caractérisée en ce que le diamètre maximal (D") de la tête d'écartement (25) est au maximum égal au diamètre extérieur (D') de la douille (1).

5. Cheville selon l'une quelconque des revendications 1 à 4, caractérisée en ce que les surfaces de contact (23) des saillies (20) présentent une pente ascendante en direction de la pièce de tête (4).

6. Cheville selon l'une quelconque des revendications 1 à 5, dans laquelle l'une des fentes est une fente traversante longitudinale (6) et l'autre fente (fente d'écartement 7) s'étend jusqu'a la région des saillies (20), caractérisée en ce que les saillies (20) sont disposées adjacentes à la fente longitudinale (6).

7. cheville selon l'une quelconque des revendications 1 à 6, caractérisée en ce que le cône intérieur (14) et la tête d'écartement (25) sont reliés l'un à l'autre par deux barrettes de liaison (26) s'étendant en parallèle à l'axe central longitudinal (5).

8. Cheville selon la revendication 7 caractérisée en ce que des barrettes de guidage (33) sont formées sur les barrettes de liaison (26) et s'encastrent au moins partiellement dans les fentes (6, 7).

9. Cheville selon l'une quelconque des revendications 1 à 8 caractérisée en ce que la tête d'écartement (25) s'amincit légèrement vers son extrémité libre.

10. Cheville selon la revendication 3 caractérisée en ce que le cône intérieur (14) présente des surfaces (36) correspondant aux méplats (32) de la douille (1).

FIG. 3

FIG. 4

FIG.1

FIG.2

FIG. 5

FIG. 6

FIG. 7

FIG. 8

FIG. 9

EP 0 287 022 B1